Europäisches Patentamt

European Patent Office

Office européen des brevets

(11) Veröffentlichungsnummer: **0 056 142**
**B1**

(12) **EUROPÄISCHE PATENTSCHRIFT**

(45) Veröffentlichungstag der Patentschrift :
05.09.84

(51) Int. Cl.³ : **H 01 J 47/06, G 01 T 1/18**

(21) Anmeldenummer : **81110685.5**

(22) Anmeldetag : **22.12.81**

(54) **Strahlenmessgerät.**

(30) Priorität : **09.01.81 DE 3100447**

(43) Veröffentlichungstag der Anmeldung :
**21.07.82 Patentblatt 82/29**

(45) Bekanntmachung des Hinweises auf die Patenterteilung : **05.09.84 Patentblatt 84/36**

(84) Benannte Vertragsstaaten :
**AT CH DE FR GB LI NL SE**

(56) Entgegenhaltungen :
DE-A- 1 589 515
DE-A- 2 534 710
DE-B- 1 179 307
DE-B- 1 205 629
US-A- 4 191 886

(73) Patentinhaber : **Genrich, Volker, Dipl.-Chem.**
**Heerstrasse 149**
**D-6000 Frankfurt am Main 90 (DE)**

(72) Erfinder : **Genrich, Volker, Dipl.-Chem.**
**Heerstrasse 149**
**D-6000 Frankfurt am Main 90 (DE)**

(74) Vertreter : **Keil, Rainer A., Dipl.-Phys. Dr. et al**
**Patentanwälte KEIL & SCHAAFHAUSEN Ammelburgstrasse 34**
**D-6000 Frankfurt am Main 1 (DE)**

## Beschreibung

Die Erfindung betrifft ein Strahlenmeßgerät zum Nachweis ionisierender Strahlung, welches als Detektor ein Zählrohr mit vollständig und dauerhaft abgeschlossenem Gasraum besitzt, sowie eine Energieversorgung, einen Hochspannungsgenerator und eine Schaltungsordnung zur Auswertung der Zählrohrimpulse.

Das erfindungsgemäße Gerät soll eine hohe Empfindlichkeit für z. B. Beta-, Gamma-, Röntgen- und Neutronenstrahlung besitzen, so daß es als Kontaminationsmeßgerät zum Aufspüren schwach radioaktiver Verunreinigungen geeignet ist. Es soll aufgrund einer einfachen, robusten und kompakten Bauweise als universelles Strahlungswarngerät eingesetzt werden können. Das erfindungsgemäße Gerät soll sich ferner mit hoher Genauigkeit fertigen, abgleichen und einfach und preisgünstig herstellen lassen.

Aus der DE-A-1 589 515 ist bereits ein Strahlenmeßgerät zum Nachweis ionisierender Strahlung der eingangs genannten Gattung bekannt. Solche Geigerzähler-Geräte herkömmlicher Bauart sind jedoch wenig empfindlich und eignen sich deshalb nicht zum Nachweis schwach radioaktiver Verunreinigungen in der Umwelt. Für diesen Zweck kommen üblicherweise spezielle Kontaminationsmonitore zum Einsatz, die mit besonderen, hochempfindlichen Zählrohren ausgerüstet sind. Die Konstruktion solcher Geräte ist jedoch so aufwendig, daß deren Einsatz aufgrund der hohen Kosten bisher nur für professionelle Anwender in Frage kommt. Die hier umrissene Ausgangssituation wird im folgenden näher erläutert.

Einige der Forderungen, die an ein zuverlässig arbeitendes Strahlenmeßgerät zu stellen sind, sind in den Normen DIN 6818 und DIN 44 801 festgelegt. Darüber hinaus ist zu beachten, daß ein Handgerät zur Kontaminationsmessung im Niedrigdosis-Bereich eine gewisse Mindes empfindlichkeit aufweisen muß, damit während einer Suchbewegung eine kurzzeitige und/oder geringe Erhöhung der Zählrate über das Durchschnittsniveau des Nulleffektes vom Benutzer auch tatsächlich erkannt werden kann.

In der Praxis sind als Kontaminationsmeßgeräte nur solche Geräte wirklich geeignet, die auf den natürlichen Strahlungshintergrund von etwa 10 Mikrorem pro Stunde mit einer Zählrate von 1 s$^{-1}$ oder mehr ansprechen. Bei geringeren Zählraten ist es außerordentlich schwierig, Veränderungen derselben unmittelbar festzustellen. Dabei ist es unerheblich, in welcher Weise die Zählrate zur Anzeige gelangt. Bei der Darstellung mit Hilfe eines Zeigerinstruments ergibt sich bei geringen Zählraten selbst bei Anwendung der maximal zulässigen Zeitkonstanten von 4 s (DIN 44 801) keine ausreichende Ablesegenauigkeit. Die optische oder akustische Einzelimpuls-Darstellung bringt keine Verbesserung, da auch der menschliche Organismus nicht in der Lage ist, langsam ablaufende stochastische Ereignisse mit hinreichender Genauigkeit zu bewerten.

Aus dem Gesagten ergibt sich, daß die standardmäßig lieferbaren Niederspannungs-Zählrohre mit Edelgas/Halogen-Füllung, insbesondere die Miniaturausführungen, für die Konstruktion eines leistungsfähigen und für Kontaminationsmessungen geeigneten Strahlungsmeßgerätes nicht in Frage kommen, weil die Empfindlichkeit dieser Detektoren zum sicheren Nachweis schwacher Strahler nicht ausreicht.

In Erkenntnis dieser Tatsache wurde schon früh die Anwendung großflächiger Proportionalzählrohre propagiert. Es sind Proportionalzählrohrgeräte bekannt, die mit verhältnismäßig hohem Aufwand in Richtung maximal möglicher Empfindlichkeit optimiert sind und die insbesondere in Form von Durchflußzählern mit dünnwandigen Fenstern als Meßgeräte für Alpha- und Betastrahlung ausgelegt sind. Alle Fensterzählrohre der genannten Art müssen bauartbedingt mit einer konstanten Hochspannung von mehreren Kilovolt betrieben werden und darin liegt eine der Hauptschwierigkeiten bei der Miniaturisierung von hochempfindlichen Strahlenmeßgeräten.

Bekannt sind auch tragbare Ausführungen mit eingebautem Großflächen-Proportionalzählrohr, die zur Überwachung der Strahlenbelastung am Arbeitsplate kommerziell erhältlich sind. Bei dem beträchtlichen Aufwand dieser Geräte, einem Bauvolumen vor mehr als 2 dm$^3$ und einem Gewicht von mehr als 1 kg kommen solche Geräte praktisch nur beim genehmigungsbedürftigen Umgang mit radioaktiven Stoffen nach § 3 StrlSchV zur Anwendung. Universell einsetzbare Taschengeräte mit großflächigen Proportinalzählrohren sind bisher nicht bekannt. Bekannt sind lediglich Taschengeräte mit Geiger-Müller-Zählrohren, insbesondere mit Zählrohren, vom Niederspannungs-Typ klassischer Bauart.

Aufgabe der Erfindung ist es, ein zuverlässig arbeitendes, als Strahlenschutzdosimeter verwendbares Strahlenmeßgerät anzugeben, das bei kleinen räumlichen Abmessungen und bei geringem Stromverbrauch ein hohes Ansprechvermögen für schwache Strahler aufweist und dessen Konstruktion so einfach und robust ausgeführt ist, daß das Gerät einem breiten Anwendungskreis zur Verfügung gestellt werden kann.

Diese Aufgabe wird erfindungsgemäß dadurch gelöst, daß das Zählrohr im wesentlichen aus drei miteinander verbundenen platten- oder folienförmigen Kunststoffteilen und einem Zähldraht aufgebaut ist, und zwar aus einem Fenster in Form eines Zuschnitts aus einer dünnwandigen, glasfaserverstärkten und metallbeschichteten Kunststoffplatte, aus einem rahmenförmigen Mittelteil in Form einer mit einem Mittelausschnitt versehenen Kunststoffplatte, aus einem Boden in Form eines Zuschnitts aus einer metallbeschichteten Kunststoffplatte und aus einem im Mittelteil aufgespannten dünnen Metalldraht, wobei das Fenster und/oder Boden eine äußere Elektrode bilden, oder daß das Zählrohr im wesentlichen aus zwei miteinander verbundenen platten- oder folienförmigen Kunststoffteilen und einem Zähldraht aufgebaut ist, und zwar aus einem Fenster in Form eines Zuschnitts aus einer dünnwandigen, glasfaserverstärken metallbeschichteten Kunststoffplatte, aus einem flachen, halbschalenförmigen Kunststoffunterteil, auf dessen Boden ein metallischer Überzug aufgebracht ist und aus einem in dem Kunststoffunterteil aufgespannten dünnen Metalldraht, wobei das Fenster und/oder der Kunststoffunterteil eine äußere Elektrode bilden.

Durch die erfindungsgemäße Konstruktion ist es möglich, mit einfachen Fertigungstechniken ein zuverlässig arbeitendes Strahlenmeßgerät als Taschengerät aufzubauen und mit einem hochempfindlichen, aber mehrere Kilovolt Hochspannung benötigenden Großflächen-Proportionalzählrohr auszustatten. Dabei können insbesondere das Zählrohr, der Hochspannungsgenerator und die Impuls-Auswertung ohne Anwendung aufwendiger Abschirmmaßnahmen in dicht gedrängter Anordnung nebeneinander aufgebaut und zusammen in einem Kunststoffgehäuse mit kleinen Abmessungen untergebracht sein.

Ein Problem bei solchen Anordnungen ist bisher das Erzielen eines ausreichenden Störspannungsabstandes zwischen den am Zähldraht abzugreifenden Impulsen und den vom Hochspannungsgenerator über Streukapazitäten in die Auswerteschaltung eingekoppelten Störimpulsen. Während bei gewöhnlichen Zählrohren vom Geiger-Müller-Typ, insbesondere bei den Niederspannungs-Halogenzählrohren, die Höhe der abgegebenen Impulse etwa $10^{-2}$ bis $10^{-1}$ der Betriebsspannung beträgt, sind diese Verhältnisse bei im Proportionalbereich betriebenen Zählrohren wesentlich ungünstiger. Dort ist mit einer Impuls-Spitzenspannung zu rechnen, die im Bereich von $10^{-6}$ bis $10^{-4}$ der Betriebsspannung liegt.

Wenn aus Sicherheitsgründen gefordert wird, daß der Störspannungsabstand bei der Signalverarbeitung um mindestens 20 dB unter dem kleinsten, bei der Auswertung zu berücksichtigenden Nutzsignal liegen soll, so bedeutet dies, daß bei der Konstruktion von Geräten mit Proportionalzählrohren Störspannungsabstände im Bereich von − 140 dB bis − 100 dB, bezogen auf die Spitzenspannung des Hochspannungsgenerators beherrscht werden müssen. Die Arbeitsfrequenz beträgt dabei üblicherweise einige Kiloherz. In diesem ungünstigen Verhältnissen liegt der Hauptgrund dafür, daß die mit Hochspannung arbeitenden Proportionalzählrohre bisher noch nicht in Geräte von echtem Taschenformat eingebaut werden konnten. Diese Probleme sind bei der Erfindung behoben.

Im folgenden wird eine Ausführungsform des erfindungsgemäßen Strahlenmeßgeräts anhand der beiliegenden Zeichnung näher erläutert.

Es zeigen :

Figur 1 Schichtkonstruktion des Zählrohres in perspektivischer Darstellung,

Figur 2 Schnitt durch die vordere Haltevorrichtung für den Zähldraht,

Figur 3 Schnitt durch die hintere Haltevorrichtung für den Zähldraht,

Figur 4 Querschnitt durch das Zählrohr,

Figur 5 Verteilung der Ansprechempfindlichkeit über den Querschnitt des Zählrohres,

Figur 6 Kennlinie des Zählrohres,

Figur 7 Blockschaltbild des Hochspannungsgenerators und der Störspannungskompensation.

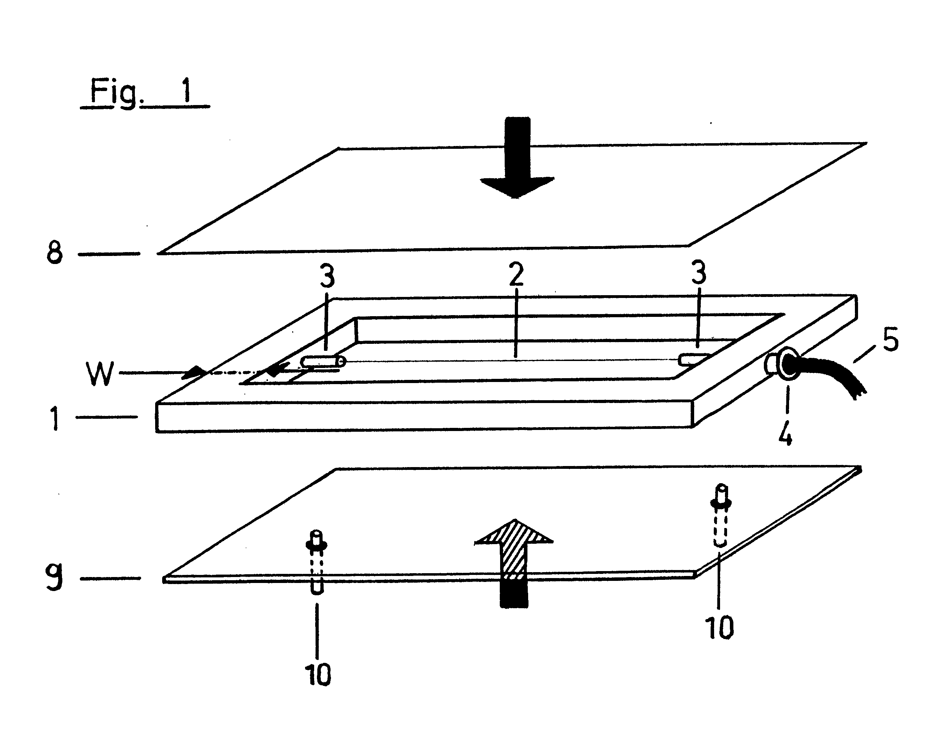

Alle genannten Anforderungen werden erfindungsgemäß durch eine Zählrohrkonstruktion erfüllt, bei der das Zählrohr im wesentlichen aus drei, z. B. durch Klebstoff verbundenen platten- bzw. folienförmigen Kunststoffteilen und einem Zähldraht besteht. Fig. 1 zeigt, wie diese Teile in einem Schichtaufbau zusammengefügt sind. Im einzelnen sind dargestellt : Ein Fenster 8 in Form eines einfachen, z. B. rechteckigen Zuschnitts aus einem dünnwandigen, glasfaserverstärkten Metall-Kunststoff-Laminat, ein rahmenförmiger Mittelteil 1, z. B. in Form einer mit einem Mittelausschnitt versehenen Kunststoffplatte, ein Boden 9 in Form eines einfachen, z. B. rechteckigen Zuschnitts aus einem beliebigen Metall-Kunststoff-Laminat und ein im Mittelteil 1 aufgespannter Metalldraht 2 mit hoher Elastizität. Weiterhin zeigt Fig. 1 zwei Isolierhülsen 3 aus Polytetrafluoräthylen (Teflon), eine Rohrniete 4 zur Abschirmung des Kabelanschlusses, ein Koaxialkabel 5 zum Ableiten der Impulse und zwei Füllstutzen 10 aus Kupferrohr.

Das den Zeichnungen zugrundeliegende Mustergerät hat ein Kunststoffgehäuse mit den Außenabmessungen 155 × 72 × 42 mm. Die Außenabmessungen des rahmenförmigen Mittelteils 1 betragen 127 × 60 mm. Die Wandstärke W beträgt 10 mm. Die Zählrohrkonstruktion füllt die Flachseite des Gehäuses voll aus.

Zur Herstellung des Fensters 8 und auch des Bodens 9 kann kupferkaschiertes Glasfaser-Epoxid-Laminat verwendet werden, in der Qualität wie es als Basismaterial für gedruckte Schaltungen bis herab zu Flächendichten von 50 mg/cm² im Handel ist. Fenster und Boden sind so mit dem rahmenförmigen Mittelteil verklebbar, daß die Metallbeschichtungen jeweils nach innen zeigen. Die Metallbeläge dienen als Kathodenflächen.

Der als Anode geschaltete Zähldraht 2 ist genau in der Mitte zwischen den Kathodenflächen aufgespannt. Sowohl der Zähldraht selbst, als auch die zu seiner Aufspannung dienenden Hilfsmaterialien sind durch den Schichtaufbau mit einfachen Mitteln wirkungsvoll abschirmbar.

Bei der Herstellung von großen Stückzahlen kann es zweckmäßig sein, Mittelteil 1 und Boden 9 zusammen in einem Stück, z. B. in Spritzgußtechnik, als Unterteil 1 + 9 herzustellen. Auf den Boden der so entstandenen Kunststoffhalbschale ist durch Laminieren oder durch Aufdampfen im Vakuum ein metallischer Überzug untergebracht.

Ansonsten unterscheidet sich diese Variante nicht von der oben gegebenen Beschreibung.

Gemäß der Erfindung wird für den Mittelteil 1 der oben beschriebenen Konstruktion weichmacherfreies Polyvinylchlorid, Polyvinylidenchlorid, Polyvinylidenfluorid oder ein Mischpolymerisat aus diesen Komponenten eingesetzt. Diese Materialien können sowohl spanabhebend als auch thermoplastisch gut verarbeitet werden und ergeben bei Anwendung von Epoxidharz-Klebstoffen gut haftende Verbindungen mit den oben erwähnten kupferkaschierten Platten. Darüber hinaus haben die genannten Materialien wegen ihrer stark polaren Molekülstruktur den besonderen Vorfzug, daß sie nur in sehr geringem Maße von dem weiter unten zu besprechenden, unpolaren Zählgas durchdrungen werden.

Es bestehen jedoch erhebliche Vorurteile über die Anwendung von Kunststoffmaterialien bei der Konstruktion von Zählrohren mit abgeschlossenem Gasraum. Die negativen Erfahrungen liegen vor allem daran, daß solche Materialien über längere Zeit Restgase abgeben und meist auch für das Zählgas nicht vollkommen undurchlässig sind.

Gewisse Erfahrungen liegen von für die Materialien Polymethylmethacrylat (Plexiglas) und Polyäthylen, insofern als diese Materialien zur Konstruktion von Zählrohren mit Gewebe-äquivalenten Wänden und zur Konstruktion von Rückstoßprotonenzählern herangezogen worden sind. Soweit solche Konstruktionen mit abgeschlossenem Gasraum für eine längere Lebensdauer vorgesehen sind, werden sie meist zusätzlich durch Einfassungen aus dünnen Metallblechen oder Metallfolien hermetisch abgedichtet.

Die Verwendung von Polymethylmethacrylat (Plexiglas) bei Zählrohren mit abgeschlossenem Gasraum ist deshalb problematisch, weil dieses Material besonders hohe Mengen an Restgasen abgibt und diese vorwiegend aus Wasserdampf bestehen. Dabei können im Zählrohr innerhalb kurzer Zeit Wasserdampf-Partialdrucke von mehr als 1 Torr entstehen. Gerade solche Moleküle, wie $H_2O$ und $O_2$, die leicht negative Ionen bilden können, stören schon in geringen Spuren erheblich. Dies würde auf die erfindungsgemäße Zählrohrkonstruktion in besonderem Maße zutreffen, weil dort die Geometrie des elektrischen Feldes ungünstiger ist, als bei der üblichen Bauweise mit radialsymmetrischem Feld.

Auch die Verwendung von Polyäthylen, Polypropylen und ähnlich aufgebauten Polymeren kommt für die erfindungsgemäße Konstruktion nicht in Frage, weil sich solche Materialien nur mit lösungsmittelhaltigen Klebstoffsystemen zufriedenstellend verarbeiten lassen. Abgesehen von der in diesem Falle schlechten Haftung auf Metalloberflächen, müßte dann auch mit einer sehr starken Gasabgabe aus der Klebefuge gerechnet werden. Aufgrund der engen chemischen Verwandtschaft zwischen den letztgenannten Polymeren und dem weiter unten zu besprechenden Zählgas ist außerdem eine hohe Löslichkeit des Gases in dem Wandmaterial zu erwarten. Der thermische Ausdehnungskoeffizient des Polyäthylens ist etwa doppelt so groß wie der des erfindungsgemäßen Materials. Dieser Materialkenngröße kommt bei der beschriebenen Konstruktion besondere Bedeutung zu.

Auch das bei vakuumtechnischen Anwendungen bevorzugte Material Polytetrafluoräthylen (Teflon) und chemisch nahe verwandte Fluorkohlenwasserstoffe scheiden wegen der besonderen klebetechnischen Schwierigkeiten für die Herstellung des Mittelteils bzw. Unterteils aus.

Bei Verwendung von Polyvinylchlorid oder chemisch ähnlichen Materialien bringt gerade die Anwendung von Kupfer im Innenraum des Zählrohres einen besonderen Vorteil : Die partiell oxidierte Oberfläche dieses Metalls bindet eventuell entstehende geringe Restgasmengen, insbesondere die Hauptstörfaktoren $H_2O$ und $O_2$, ggf. auch HCl oder HF, chemisch sehr fest und macht sie dadurch unschädlich. Dieser Mechanismus ist wesentlich, wenn trotz der Anwendung von Kunststoffmaterialien eine lange Lebensdauer der Zählrohre erreicht werden muß.

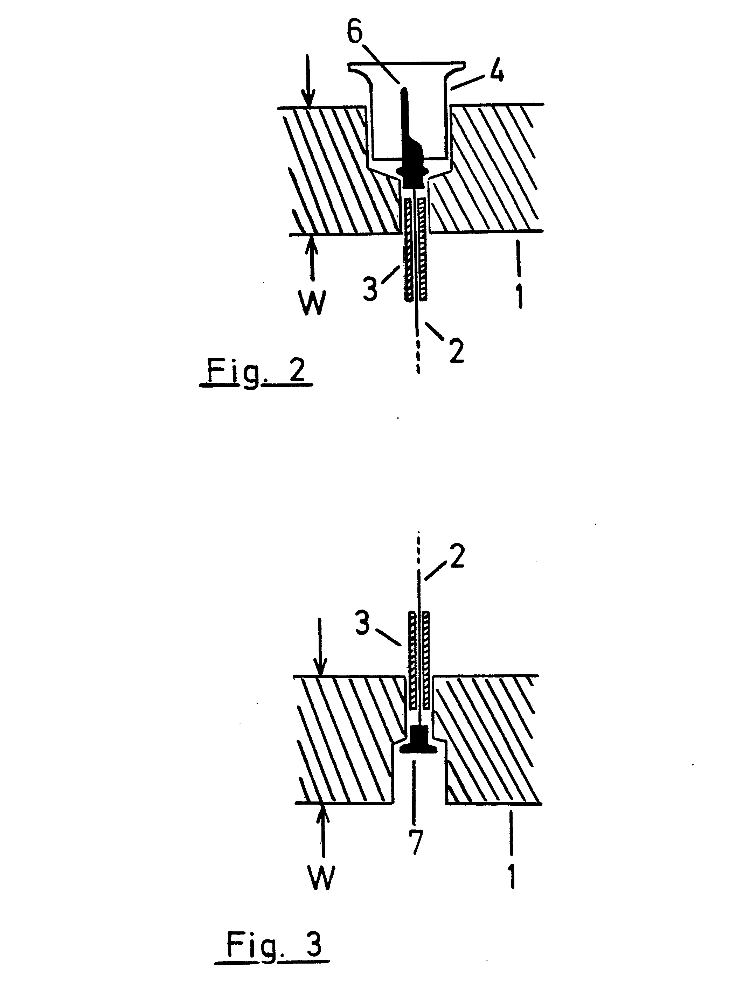

Die Fig. 2 und 3 zeigen in einem horizontalen Schnitt in vergrößertem Maßstab, mit welchen Hilfsmitteln der Zähldraht 2 im Mittelteil 1 aufgespannt ist. Eine Lothülse 6 befindet sich am vorderen Zähldrahtende und dient zum Anschluß des Zähldrahtes 2 an das Koaxialkabel 5. Eine kleine Rohrnierte 7 dient als hinterer Endabschluß des Zähldrahtes 2. Der Zähldraht 2 ist mit definierter Vorspannung an den Metallteilen 6 und 7 angelötet. Die beiden in den Fig. 2 und 3 gezeigten Befestigungsvorrichtungen für den Zähldraht sind durch Ausgießen mit Epoxidharz abgedichtet.

Bisher war es allgemein üblich, die mechanische Spannung des Zähldrahtes durch eine im Zählrohr angebrachte Spiralfeder dauerhaft aufrechtzuerhalten. Wenn aus Gründen der Raumeinsparung oder aus Gründen rationeller Fertigung auf eine Spannfeder verzichtet werden muß, dann müssen um so höhere Anforderungen an die Materialeigenschaften des Zähldrahtes gestellt werden, damit dieser Draht unter allen Betriebsbedingungen gespannt bleibt.

Eine befriedigende Lösung des genannten Problems besteht bei einer Weiterbildung der Erfindung darin, daß bei aus Kunststoffmaterialien aufgebauten Zählrohren ohne Spannfeder solche Legierungen eingesetzt werden, die einen hohen Wärmeausdehnungskoeffizienten, einen niedrigen Elastizitätsmodul, einen weiten Bereich der voll-elastischen Verformbarkeit, eine hohe Zugfestigkeit und eine gute Lötbarkeit vereinen. Nach der Erfindung kann bei Konstruktionen aus Kunststoff eine gehärtete Gold-Silber-Kupfer-Legierung mit der Zusammensetzung 70 % Au, 20 % Ag und 10 % Cu oder die gehärtete Widerstandslegierung Manganin mit der Kurzformel CuMn12Ni nach DIN 17 471 eingesetzt werden.

Die für Zähldrähte üblichen Materialien, wie Wolfram, Platin, Chromeisen und andere versagen bei Konstruktionen aus Kunststoff, weil bei Temperaturzyklen entweder der Draht reißt oder irreversible Verformung des Drahtes oder des zur Aufspannung dienenden Mittelteils bzw. Unterteils eintritt. Auch gute Lötbarkeit ist bei Konstruktionen aus Kunststoffmaterialien vorteilhaft.

Als Zählgas wird vorzugsweise hochgereinigtes n-Butan oder hochgereinigtes iso-Butan in den Gasraum des Zählrohres eingefüllt. Diese Gase sind langfristig inert gegenüber allen mit dem Gasraum in Verbindung stehenden Materialien, insbesondere gegenüber Polyvinylchlorid und chemisch ähnlichen Polymeren, ausgehärteten Epoxid-Harzen, Kupfer, Tetrafluoräthylen, der genannten Gold-Silber-Kupfer-Legierung, der Widerstandslegierung Manganin und dem bei der Lötung verwendeten flußmittelfreien Lötzinn. Darüber hinaus wirkt sich das hohe Molekulargewicht des vorgeschlagenen Gases günstig in Richtung niedriger Diffusionsgeschwindigkeiten aus. Durch den hohen Anteil von Wasserstoffatomen im Butanmolekül ist als Besonderheit auch das Erfassen von schnellen Neutronen mit dem Zählrohr möglich.

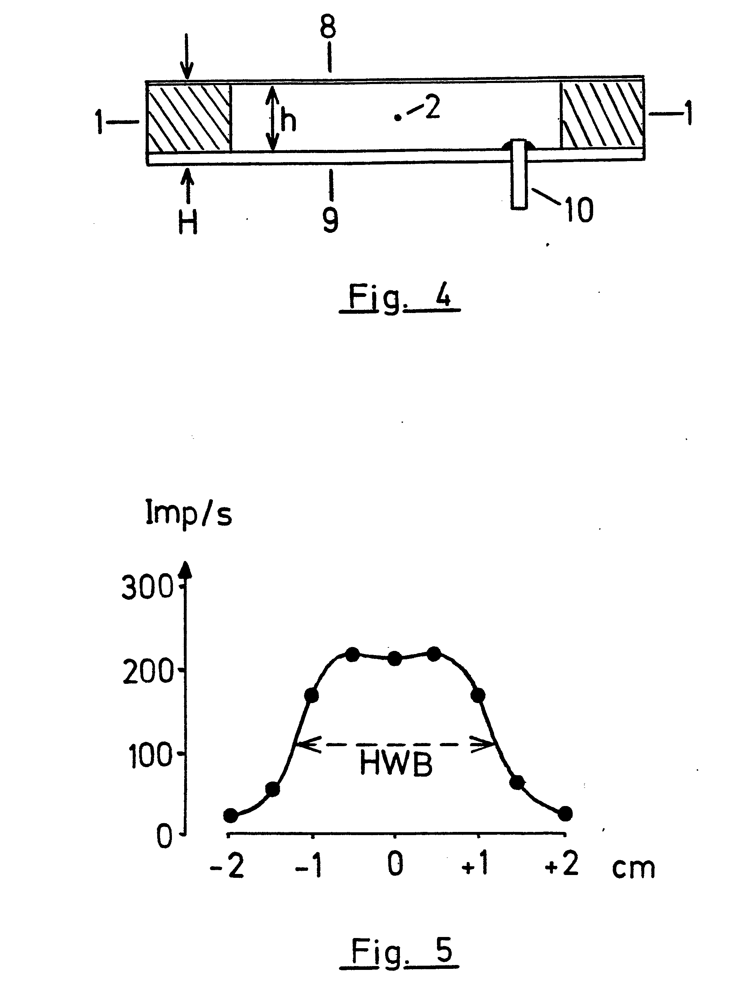

Fig. 4 zeigt einen Querschnitt durch die Zählrohrkonstruktion. Bei dem den Zeichnungen zugrundeliegenden Mustergerät beträgt die lichte Höhe h des Gasraumes 8 mm und die gesamte Bauhöhe H 10 mm.

Fig. 5 zeigt, wie sich die Ansprechempfindlichkeit des Zählrohres über den Querschnitt nach Fig. 4 verteilt. Gemessen wurde mit der auf 5 mm Breite ausgeblendeten Mischstrahlung von natürlichem Uran. Die Betriebsspannung des Zählrohres beträgt bei dieser Messung 3 200 V, die Diskriminator-Schwelle 100 mV. Die effektiv nutzbare Breite des Zählrohres, gemessen als Halbwertsbreite HWB ergibt sich zu etwa 2,5 cm.

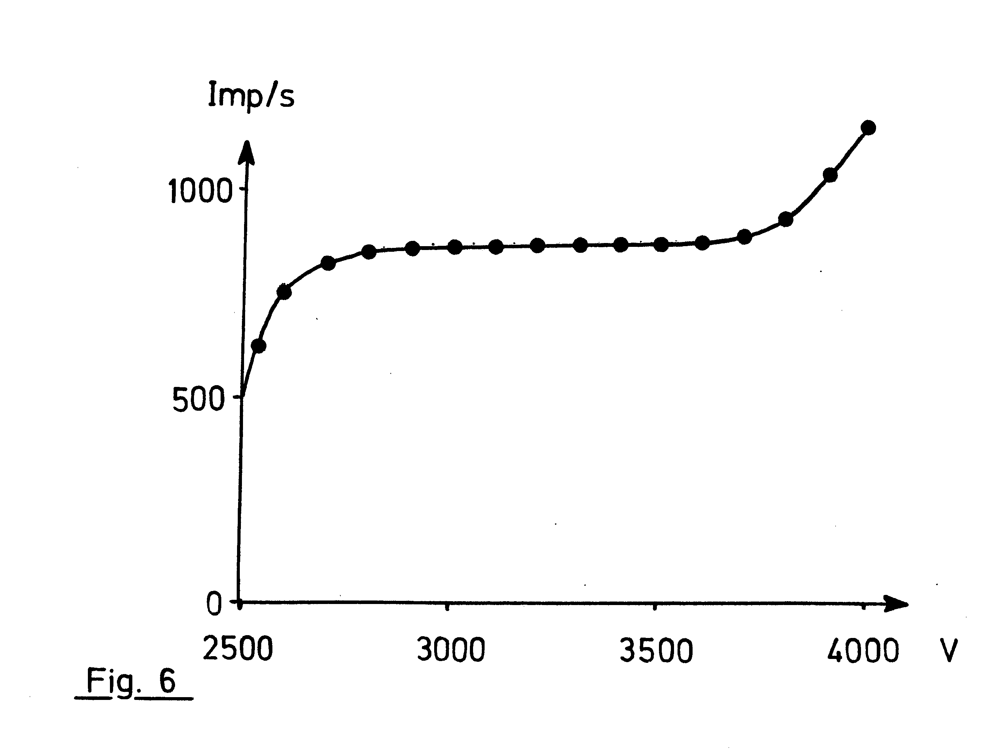

Fig. 6 zeigt die vollständige Kennlinie der bevorzugten und in obigen Figuren beschriebenen Ausführungsform des Zählrohres. Die Kennlinie gilt für gleichmäßig über die gesamte Fensterfläche verteilte Strahlung von natürlichem Uran. Die Diskriminator-Schwelle beträgt 100 mV. Im Bereich des Plateaus wird über einen Bereich von 800 V eine konstante Zählrate erhalten. Nach Alterungsversuchen bei erhöhter Temperatur, die einem Zeitablauf von drei Jahren entsprachen, konnten keine wesentlichen Veränderungen an der Zählrohrkennlinie festgestellt werden.

Weitere Daten des Muster-Zählrohres in der bevorzugten Ausführungsform :

Nulleffekt (ohne Abschirmung) : ca. 1,2 Imp/s
Zählrate bei einer Dosisleistung von 1 mR/h : ca. 120 Imp/s

Zusammenfassend kann gesagt werden, daß die erfindungsgemäße Konstruktion des Zählrohres in einem Schichtaufbau sehr unterschiedlichen Kriterien genügt. Es wird bei großer Fensterfläche eine geringe Bauhöhe erreicht, so daß Zählrohr und Elektronik zusammen in einem flachen Gehäuse übereinander angeordnet werden können. In Bezug auf das Fenstermaterial wird ein Werkstoff eingesetzt, der einerseits aufgrund geringer Flächendichte gute Durchlässigkeit für Betastrahlung hat, der weiterhin aufgrund seiner Zusammensetzung eine geringe Wellelängenabhängikeit bei der Absorption von Photonenstrahlung aufweist, der aber andererseits ausreichende mechanische Stabilität besitzt, so daß das Fenster nicht durch besondere Hilfskonstruktionen wie Schutzgitter oder ähnliches vor Zerstörung geschützt werden muß. Ohne Hilfskonstruktionen wird eine Dekontamination des Meßgerätes wesentlich erleichtert.

Im Hinblick auf die Empfindlichkeit für Gammastrahlung und auch im Hinblick auf die Langzeitstabilität der Zählrohrkennlinie wirkt es sich günstig aus, daß der Innenraum des Zählrohres zu einem großen Anteil durch Wandungen aus Metall begrenzt ist. Wände aus Kunststoffmaterialien haben relativ hohe Wandstärken, so daß ein- und auswärts gerichtete Gasdiffusionsprozesse in unschädlichen Grenzen bleiben.

Schließlich wird durch den Schichtaufbau auch der erwähnten Problematik mit dem Störspannungsabstand Rechnung getragen. Bei der gezeigten Formgebung der Kathodenflächen ist eine gute Abschirmung des Zähldrahtes selbst, seiner beidseitigen Halterungen und des Kabelanschlusses zum Abgreifen der Impulse gegeben.

Alle Teile der Zählrohrkonstruktion zeichnen sich durch einfache Formgebung aus bzw. sind als Fertigteile im Handel. Auf diese Weise ist es möglich, die Zählrohre rationell und kostengünstig herzustellen. Die Konstruktion ist robust und unempfindlich gegen die mechanischen Belastungen, denen eine universelles Strahlenwarngerät ausgesetzt werden kann.

Wenn die Zählrohre im Bereich höherer Dosisleitung eingesetzt werden müssen und dabei die übliche Lebensdauergrenze von $10^{10}$ bis $10^{12}$ Impulsen bei Zählrohren mit sich irreversibel zersetzenden Gasfüllungen erreicht wird, dann kann nach einer weiteren Ausbildung der Erfindung zusätzlich ein besonderes Reinigungsprinzip angewendet werden : Durch Einbringen von Absorbentien wie Aktivkohle, Kieselgel, Aluminiumoxid, Magnesiumoxid oder dergl. in den abgeschlossenen Gasraum kann der schädliche Einfluß der bei der Entladung gebildeten Zersetzungsprodukte verringert und die Lebensdauer der Zählrohre unter starker Strahlenbelastung heraufgesetzt werden.

Weitere Maßnahmen der Erfindung betreffen die Ausgestaltung der elektronischen Baugruppen. In Bezug auf die Elektronik liegen bei einem Strahlenmeßgerät in Taschenformat besondere Verhältnisse vor. Herkömmliche Schaltungstechniken können nicht ohne weiteres übernommen werden, weil die räumliche Nähe von Hochspannungserzeugung und Impuls-Auswertung zu den oben erwähnten Problemen mit der Störspannungseinkopplung führt. Vollständige Abschirmung der einzelnen Baugruppen in separaten Metallgehäusen kommt bei einem einfachen Taschengerät wegen des zusätzlichen Raumbedarfs und des erhöhten Gewichts nicht in Frage. Bei Taschengeräten ist neben einer besonderen Ausbildung der Zählrohrkonstruktion, z. B. in Form eines Schichtaufbaues, ein besonders störspannungsarmer Hochspannungsgenerator notwendig und es ist weiterhin vorteilhaft, eine besondere, abgleichbare Störspannungskompensation vorzusehen.

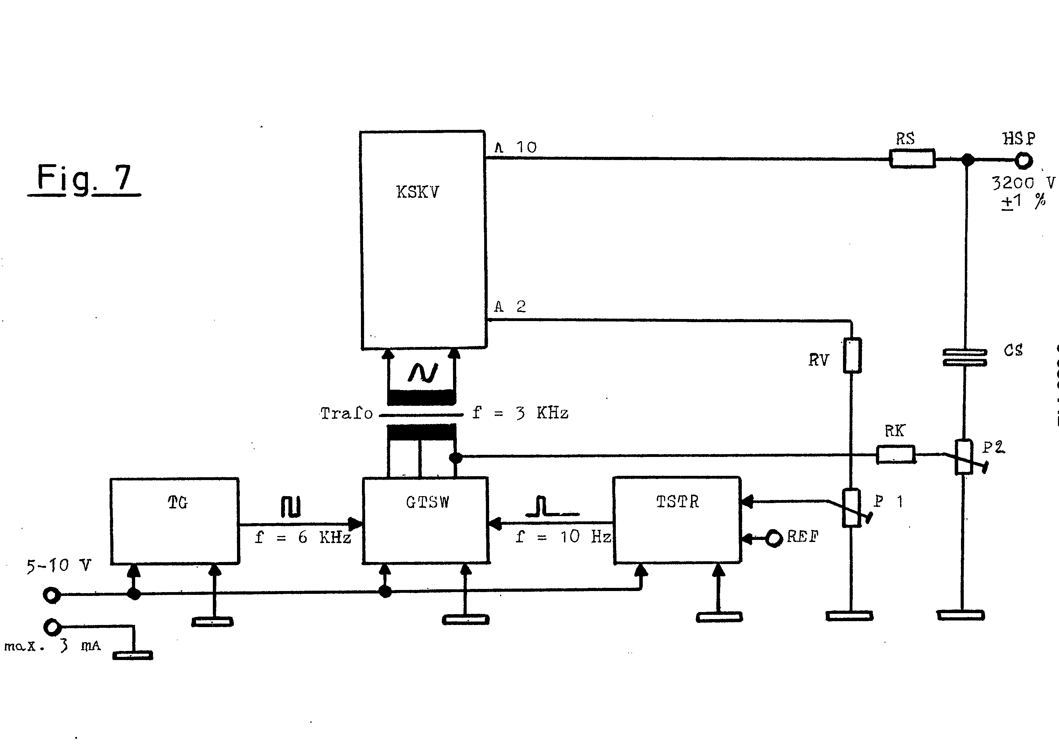

Fig. 7 zeigt ein Blockschaltbild des erfindungsgemäßen Hochspannungsgenerators und der dazugehörigen, auf die Impuls-Auswerteschaltung wirkenden Störspannungskompensation. Fig. 7 wird wie filgt erläutert :

Ein Gegentakt-Sinuswandler GTSW wird von einem Taktgenerator TG fortlaufend angesteuert. Die Betriebsspannung wird jedoch nur dann an den Gegentakt-Sinuswandler angelegt, wenn der Tastregler TSTR ein entsprechendes Freigabesignal erzeugt. Die Freigabesignale werden dann erzeugt, wenn die Zählrohrbetriebsspannung unter einen bestimmten Wert gefallen ist. Dies wird dadurch festgestellt, daß ein aus der zweiten Stufe A2 des Kaskadenvervielfachers KSKV über einen Spannungsteiler RV, P1 abgegriffenes Ist-Signal mit einer Referenzspannung REF verglichen wird.

Aus der obersten Stufe A10 des Kaskadenvervielfachers wird die Hochspannung HSP über eine Siebkette RS, CS entnommen. Im Fußpunkt der Siebkette RS, CS ist ein niederohmiges Potentiometer P2 eingebaut, über welches ein bestimmter Anteil des vom Gegentakt-Sinuswandler erzeugten Signals über einen Vorwiderstand RK zur Kompensation von Störspannungen eingekoppelt wird.

Ziel der Störspannungskompensation ist es nicht, eine vollkommene Glättung der Hochspannung zu erreichen, sondern das Potentiometer P2 so abzugleichen, daß in der zur Verstärkung und Auswertung der Zählrohrimpulse vorgesehenen Schaltungsanordnung ein größtmöglicher Störspannungsabstand zustande kommt. Dies ist etwa dann der Fall, wenn der hauptsächlich von den Bauteilen des Kaskadenvervielfachers KSKV herrührende und in die Auswerteschaltung eingekoppelte Störspannungsanteil phasenrichtig und mit der erforderlichen Amplitude durch das der Hochspannung überlagerte und über die Zählrohrkapazität bis zur Auswerteschaltung weitergeleitete Kompensationssignal aufgehoben wird. Die Verstärkung und Auswertung der Impulse kann mit allen herkömmlichen Methoden erfolgen.

Erfindungsgemäß wird eine erhebliche Reduzierung der vom Hochspannungsgenerator abgebenen Störstrahlung dadurch erreicht, daß der Gleichspannungswandler nicht in üblicher Weise als Sperrwandler ausgelegt ist, sondern als Gegentakt-Sinuswandler Signale mit geringem Oberwellengehalt erzeugt. Dies ist eine für ein batteriebetriebenes Gerät ungewöhnliche Maßnahme, weil ein solcher Wandler auch bei geringer sekundärseitiger Belastung eine relativ hohe Stromaufnahme hat. Diese Stromaufnahme ist jedoch durch eine weitere Maßnahme der Erfindung um mehr als den Faktor 10 gesenkt worden, indem der Regler für die Konstanthaltung der Hochspannung als Tastregler ausgelegt ist. Gemäß den Steuersignalen des Tastreglers braucht der Gegentakt-Sinuswandler nicht fortlaufend zu arbeiten, sondern er wird periodisch ein- und ausgeschaltet mit einem solchen Tastverhältnis, wie es zur Aufrechterhaltung der Zählrohr-Betriebsspannung notwendig ist. Das Ein- und Ausschalten des Wandlers gelingt mit gutem Wirkungsgrad, wenn der Wandler von einem Taktgenerator mit doppelter Arbeitsfrequenz angesteuert wird.

Eine weitere Besonderheit der Erfindung besteht darin, daß eine Verbesserung des Verhältnisses von Nutzsignal zu Störsignal dadurch erreicht wird, daß in die Siebkette des Hochspannungsgenerators ein in der Amplitude abgleichbares Kompensationssignal einkoppelbar ist, welches dem Gegentakt-Sinuswandler entnehmbar ist. Eine Kompensation dieser Art kann nur dann optimal abgeglichen werden, wenn das zu unterdrückende Störsignal so wie im Falle des Gegentakt-Sinuswandlers oberwellenarm ist und die Störspannungskomponente dadurch in Frequenz und Phasenlage mit dem vom Gegentakt-Sinuswandler abgegebenen Signal weitgehend identisch ist.

Der Hochspannungsgenerator des Mustergerätes ist mit CMOS-Gattern und Standard-Operationsverstärkern aufgebaut und liefert bei Eingangsspannungen von 5 bis 10 V eine auf ± 1 % stabilisierte Hochspannung von 3 200 V. Die Stromaufnahme beträgt dabei maximal 3 mA. Nach dem Einschalten des Gerätes ist die Hochspannung innerhalb von 2 s stabil auf 3 200 V.

Im Zusammenhang mit der beschriebenen Erfindung wird auch ein besonders einfaches Verfahren zur Befüllung des Zählrohres mit dem Zählgas angegeben. Die Befüllung des Zählrohres erfolgt im Zusammenhang mit einem besonderen Spül- und Alterungsprozeß, der die Grundlage für eine hohe Langzeitstabilität der Zählrohrkennlinie bildet und der sich durch geringen Arbeitsaufwand auszeichnet. Der dabei angewendete Fülldruck entspricht etwa dem Atmosphärendruck.

Vorzugsweise werden alle Zählrohre einer Produktionscharge nach der Verklebung über die ein- und ausgangsseitig vorgesehenen Füllstutzen 10 in Reihe miteinander verbunden und bei erhöhter Temperatur zunächst ausreichend lange mit getrockneter Luft, dann mit technisch reinem Argon und danach mit hochgereinigtem Butan in langsamem Durchfluß gespült und dadurch gealtert. Nach dem Spül- und Alterungsprozeß werden die Zählrohre nacheinander abgenommen, ohne den Gasdurchfluß zu unterbrechen. Beim Abnehmen der einzelnen Zählrohre werden die aus dünnem Kupferrohr bestehenden Füllstutzen 10 (Fig. 1) zusammengepreßt und verlötet.

## Ansprüche

1. Strahlenmeßgerät zum Nachweis ionisierender Strahlung, welches als Detektor ein Zählrohr mit vollständig und dauerhaft abgeschlossenem Gasraum besitzt, sowie eine Energieversorgung, einen Hochspannungsgenerator und eine Schaltungsanordnung zur Auswertung der Zählrohrimpulse, dadurch gekennzeichnet, daß das Zählrohr im wesentlichen aus drei miteinander verbundenen platten- oder folienförmigen Kunststoffteilen (1, 8, 9) und einem Zähldraht (2) aufgebaut ist, und zwar aus einem Fenster (8) in Form eines Zuschnitts aus einer dünnwandigen, glasfaserverstärkten und metallbeschichteten Kunststoffplatte, aus einem rahmenförmigen Mittelteil (1) in Form einer mit einem Mittelausschnitt versehenen Kunststoffplatte, aus einem Boden (9) in Form eines Zuschnitts aus einer metallbeschichteten Kunststoffplatte und aus einem im Mittelteil (1) aufgespannten dünnen Metalldraht (2), wobei das Fenster (8) und/oder der Boden (9) eine äußere Elektrode bilden.

2. Strahlenmeßgerät zum Nachweis ionisierender Strahlung, welches als Detektor ein Zählrohr mit vollständig und dauerhaft abgeschlossenem Gasraum besitzt, sowie eine Energieversorgung, einen Hochspannungsgenerator und eine Schaltungsanordnung zur Auswertung der Zählrohrimpulse, dadurch gekennzeichnet, daß das Zählrohr im wesentlichen aus zwei miteinander verbundenen platten- oder folienförmigen Kunststoffteilen (1, 8, 9) und einem Zähldraht (2) aufgebaut ist, und zwar aus einem Fenster (8) in Form eines Zuschnitts aus einer dünnwandigen, glasfaserverstärkten metallbeschichteten Kunststoffplatte, aus einem flachen, halbschalenförmigen Kunststoffunterteil (1, 9) auf dessen Boden ein metallischer Überzug aufgebracht ist und aus einem in dem Kunststoffunterteil (1, 9) aufgespannten dünnen Metalldraht (2), wobei das Fenster (8) und/oder der Kunststoffunterteil (1, 9) eine äußere Elektrode bilden.

3. Strahlenmeßgerät nach Anspruch 1 oder 2, dadurch gekennzeichnet, daß die den Gasraum des Zählrohres begrenzenden Kunststoffteile (1, 8, 9) aus den weichmacherfreien Materialien Polyvinylchlorid, Polyvinylidenchlorid, Polyvinylidenfluorid oder einem Mischpolymerisat aus diesen Komponenten bestehen und mit einem Zweikomponenten-Epoxidharz als Klebstoff miteinander verbunden sind, daß die Metallbeschichtung aus Kupfer besteht und daß das Füllgas aus einem unpolaren Gas der aliphatischen Reihe, vorzugsweise aus hochgereinigtem Butan, besteht.

4. Strahlenmeßgerät nach einem der Ansprüche 1 bis 3, dadurch gekennzeichnet, daß innerhalb des Gasraumes gegenüber dem Zählgas inerte Absorbermaterialien wie Aktivkohle, Kieselgel, Aluminiumoxid, Magnesiumoxid oder Molekularsiebe für die Absorption der bei der elektrischen Entladung entstehenden Zersetzungsprodukte des Zählgases untergebracht sind.

5. Strahlenmeßgerät nach einem der Ansprüche 1 bis 4, dadurch gekennzeichnet, daß das Material des Zähldrahtes (2) eine gehärtete Gold-Silber-Kupfer-Legierung mit der Zusammensetzung 70 % Au, 20 % Ag und 10 % Cu oder die gehärtete Widerstandslegierung Manganin mit der Kurzformel CuMn12Ni nach DIN 17 471 ist.

6. Strahlenmeßgerät nach einem der Ansprüche 1 bis 5, dadurch gekennzeichnet, daß der Hochspannungsgenerator als Gleichspannungswandler ausgebildet ist und als Gegentakt-Sinuswandler Signale mit geringem Oberwellengehalt erzeugt.

7. Strahlenmeßgerät nach einem der Ansprüche 1 bis 6, dadurch gekennzeichnet, daß in die Siebkette des Hochspannungsgenerators ein in der Amplitude abgleichbares Kompensationssignal eingekoppelt ist, welches dem Gegentakt-Sinuswandler entnehmbar ist.

8. Strahlenmeßgerät nach einem der Ansprüche 1 bis 7, dadurch gekennzeichnet, daß der Gegentakt-Sinuswandler periodisch in einem solchen Tastverhältnis ein- und ausgeschaltet wird, daß die Zählrohrbetriebsspannung konstant gehalten wird.

9. Verfahren zur Herstellung eines Zählrohres nach einem der Ansprüche 1 bis 5, dadurch gekennzeichnet, daß unmittelbar vor dem endgültigen Einfüllen des Zählgases in den Gasraum des Zählrohres ein Spül- und Alterungsprozeß durchgeführt wird, der darin besteht, daß eine Anzahl von Zählrohren einer Produktionscharge nach der Montage über ein- und ausgangseitig vorgesehenen Füllstutzen (10) in Reihe miteinander verbunden und bei erhöhter Temperatur ausreichend lange zunächst mit getrockneter Luft, dann mit technisch reinem Argon und danach mit hochgereinigtem Butan in langsamen Durchfluß gespült wird.

**Claims**

1. A radiation metering apparatus for detecting ionizing radiation which, as a detector, has a counter tube with a completely and permanently sealed gas chamber, an energy supply, a high-voltage generator and a circuit arrangement for evaluating the counter tube pulses, characterized in that the counter tube substantially comprises three plate-like or foil-type plastic parts (1, 8, 9) bonded together, and a counter wire (2), more specifically a window (8) in the form of a blank of a thin-walled, glass fiber-reinforced and metal-laminated plastic plate, a frame-shaped central part (1) in the form of a plastic plate provided with a central cutout, a bottom (9) in the form of a blank of a metal-laminated plastic plate and a thin metal wire (2) fastened in the central part (1), with the window (8) and/or the bottom (9) forming an outer electrode.

2. A radiation metering apparatus for detecting ionizing radiation which, as a detector, has a completely and permanently sealed gas chamber, an energy supply, a high-voltage generator and a circuit arrangement for evaluating the counter tube pulses, characterized in that the counter tube substantially comprises two plate-like or foil-type plastic parts (1, 8, 9), bonded together, and a counter wire (2), more specifically a window (8) in the form of a blank of a thin-walled, glass fiber-reinforced and metal-laminated plastic plate, a flat crescent-shaped plastic base (1, 9) to the bottom of which is applied a metal coating, a thin metal wire, (2) fastened in the plastic base (1, 9), with the window (8) and/or the plastic base (1, 9) forming an outer electrode.

3. A radiation metering apparatus according to claims 1 or 2, characterized in that the plastic parts (1, 8, 9) defining the gas chamber of the counter tube are composed of the unplasticized materials polyvinyl chloride, polyvinylidene chloride, polyvinylidene fluoride or a copolymer of these components, and are bonded together by means of a two-component epoxy resin adhesive, that the metal coating is copper and that the filling gas is a non-polar gas of the aliphatic series, preferably high-purity butane.

4. A radiation metering apparatus according to any one of claims 1 to 3, characterized in that accommodated inside the gas chamber are absorbent materials such as activated coal, silica gel, aluminum oxide, magnesium oxide inert over the counter gas, or molecular filters for the absorption of the products of decomposition of the counter gas, produced during electric discharge.

5. A radiation metering apparatus according to any one of claims 1 to 4, characterized in that the material of the counter wire (2) is a hardened gold-silver-copper alloy composed of 70 % Au, 20 % Ag and 10 % Cu, or the hardened resistance alloy manganin expressed by the brief formula CuMn12Ni as defined by DIN 17 471.

6. A radiation metering apparatus according to any one of claims 1 to 5, characterized in that the high-voltage generator is formed as a direct voltage converter which, being a push-pull sine wave converter, generates signals having a low harmonic content.

7. A radiation metering apparatus according to any one of claims 1 to 6, characterized in that coupled into the filter chain of the high-voltage generator is compensation signal of adjustable amplitude, which can be drawn from the push-pull sine wave converter.

8. A radiation metering apparatus according to any one of claims 1 to 7, characterized in that the push-pull sine wave converter is periodically switched on and off at a duty ratio such that the counter tube operating voltage is kept constant.

9. A method for producing a counter tube according to any one of claims 1 to 5, characterized in that immediately prior to finally introducing the counter gas into the gas chamber of the counter tube a scavenging and aging process is performed, residing in that a number of counter tubes of one product batch, after assembly, via a filling nozzle (10) provided at the input and output sides, are connected to one another in series and, at an elevated temperature, are scavenged for an adequately long period of time first with dried air, then with industrially pure argon and subsequently, with high-purity butane at a slow rate of flow.

**Revendications**

1. Appareil de mesure de rayonnements pour indiquer du rayonnement ionisant qui, formant détecteur, est pourvu d'un tube compteur ayant une chambre de gaz bouchée complètement et durablement, une alimentation en énergie, une génératrice à haute tension et un ensemble de circuits pour évaluer les impulsions de tube compteur, caractérisé en ce que le tube compteur essentiellement est composé de trois parties reliées (1, 8, 9) en matière plastique sous forme de plaque ou feuille et d'un fil compteur (2), notamment d'une fenêtre (8) sous forme de flan d'une plaque en matière plastique à paroi mince, renforcée de fibre de verre et couverte d'une couche métallique, d'une partie moyenne (1) formant cadre sous forme de plaque en matière plastique ayant une découpure moyenne, d'un fond (9) sous forme de flan d'une plaque en matière plastique couverte d'une couche métallique et d'un fil mince métallique (2) fixé dans la partie moyenne (1), la fenêtre (8) et/ou le fond (9) formant une électrode extérieure.

2. Appareil de mesure de rayonnements pour indiquer du rayonnement ionisant qui, formant détecteur, est pourvu d'un tube compteur ayant une chambre de gaz bouchée complètement et durablement, une alimentation en énergie, une génératrice à haute tension et un ensemble de circuits pour évaluer les impulsions de tube compteur, caractérisé en ce que le tube compteur essentiellement est composé de deux parties reliées (1, 8, 9) en matière plastique sous forme de plaque ou feuille et d'un fil compteur (2), notamment d'une fenêtre (8) sous forme de flan d'une plaque en matière plastique à paroi mince, renforcée de fibre de verre et couverte d'une couche métallique, d'une partie inférieure (1, 9) plane en matière plastique sous forme de demi-lune sur le fond duquel est mis une couche métallique, et d'un fil métallique (2) mince fixé dans la partie inférieure (1, 9) en matière plastique, la fenêtre (8) et/ou la partie inférieure (1, 9) en matière plastique formant une électrode extérieure.

3. Appareil de mesure de rayonnements suivant les revendications 1 ou 2, caractérisé en ce que les parties (1, 8, 9) en matière plastique, définissant la chambre de gaz du tube compteur, sont formées des matières non plastifiées polyvinyl chlorure, polyvinylidène chlorure, polyvinylidène fluorure ou un copolymère de ces éléments et sont reliées l'un à l'autre par un adhésif sous forme de résine époxy de deux éléments, que la couche métallique est du cuivre et que le gaz de remplissage est un gaz non polaire de la série aliphatique, préférablement butane de grande pureté.

4. Appareil de mesure de rayonnements suivant l'une des revendications 1 à 3, caractérisé en ce que des matières d'absorption inerte vis-à-vis le gaz compteur, à savoir du charbon activé, du gel de silice, de l'oxide d'aluminium, de l'oxide de magnésium, ou des tamis moléculaires pour l'absorption des produits de décomposition du gaz compteur se formant en décharge électrique, sont logées dans la chambre de gaz.

5. Appareil de mesure de rayonnements suivant l'une des revendications 1 à 4, caractérisé en ce que la matière du fil compteur (2) est un alliage durci d'or/d'argent/de cuivre composé de 70 % Au, 20 % Ag et 10 % Cu ou l'alliage de résistance durci manganin de formule brève CuMn12Ni définie sous DIN 17 471.

6. Appareil de mesure de rayonnements suivant l'une des revendications 1 à 5, caractérisé en ce que la génératrice à haute tension est formée comme transformateur de tension continue produisant à titre de transformateur sinoïde en push-pull des signaux d'un contenu d'harmoniques basses.

7. Appareil de mesure de rayonnements suivant l'une des revendications 1 à 6, caractérisé en ce qu'un signal de compensation d'une amplitude réglable est couplé dans le filtre de la générarice à haute tension ce que peut être retiré du transformateur sinoïde en push-pull.

8. Appareil de mesure de rayonnements suivant l'une des revendications 1 à 7, caractérisé en ce que le transformateur sinoïde en push-pull est périodiquement mis dans et hors du circuit au rapport d'impulsations de sorte que la tension de service de tube compteur soit tenue constante.

9. Procédé pour réaliser un tube compteur suivant l'une des revendications 1 à 5, caractérisé en ce qu'immédiatement avant l'introduction définitive du gaz compteur dans la chambre de gaz du tube compteur, un procédé de balayage et vieillissement est réalisé de sorte que nombre de tubes compteurs d'une charge de production après le montage soient reliés en série par l'intermédiaire de raccords de remplissage (10) pourvus à l'entrée et à la sortie et à température élevée soient balayés suffisamment longtemps d'abord avec l'air sec, puis avec de l'argon industriellement pur et après avec du butane de grande pureté au passage lent.

Fig. 1

8

3    2    3

W

1

5

4

9

10    10

0 056 142

Fig. 2

Fig. 3

Fig. 4

Fig. 5

Fig. 6

Fig. 7

0 056 142